# EUROPÄISCHE PATENTANMELDUNG

(11) **EP 2 853 814 A2**
(43) Veröffentlichungstag der Anmeldung: **01.04.2015**
(21) Anmeldenummer: 14185922.3
(22) Anmeldetag: 23.09.2014
(51) Int. Cl.: F23J 15/06, F23J 15/02

(54) **Abgasanlage**

(30) Priorität: 27.09.2013 DE 102013110738
(71) Anmelder: Grabitz, Axel, 23552 Lübeck (DE); Köln, Klaus-Wilhelm, 23560 Lübeck (DE); Karschny, Dietrich, 24257 Hohenfelde (DE)
(72) Erfinder: Grabitz, Axel, 23552 Lübeck (DE); Köln, Klaus-Wilhelm, 23560 Lübeck (DE); Karschny, Dietrich, 24257 Hohenfelde (DE)
(74) Vertreter: Vonnemann, Gerhard

(57) **Zusammenfassung**

Die Erfindung betrifft eine Abgasanlage (1) für Brennstellen (2), insbesondere zur Verbrennung von Feststoffen, vorzugsweise zur Verbrennung von Holz, mit einem Wärmetauscher (3) zur Erwärmung eines, vorzugsweise flüssigen, Wärmeträgers (4) und einem Abgasrohr (5) oder Kamin. Zum wartungsarmen Betrieb einer solchen Anlage wird vorgeschlagen, dass die Anlage (1) einen Abzweig (6) vom Abgasrohr (5) aufweist, in dem der Wärmetauscher (3) und ein Abgasventilator (7) angeordnet ist. Außerdem kann die Anlage eine Reinigungsvorrichtung (15), eine Spülvorrichtung (11) und eine Abgasreinigungsvorrichtung (10) aufweisen.

## Beschreibung

Die Erfindung betrifft eine Abgasanlage für Brennstellen, insbesondere zur Verbrennung von Feststoffen, vorzugsweise zur Verbrennung von Holz, mit einem Wärmetauscher zur Erwärmung eines, vorzugsweise flüssigen, Wärmeträgers und einem Abgasrohr oder Kamin.

Außerdem betrifft die Erfindung eine mechanische Reinigungsvorrichtung für einen Wärmetauscher, wobei der Wärmetauscher als Rohrbündelwärmetauscher ausgebildet ist, und eine Reinigungsvorrichtung zur Reinigung der Wärmetauscherfläche vorgesehen ist, die als bewegliche Lochplatte ausgebildet ist und wobei die Rohre des Wärmetauschers die Löcher der Platte durchdringend angeordnet sind.

Desweiteren betrifft die Erfindung einen elektrostatischen Filter für eine Abgasanlage mit mindestens einer Brennstelle, insbesondere zur Verbrennung von Feststoffen, vorzugsweise zur Verbrennung von Holz, mit einem Wärmetauscher zur Erwärmung eines, vorzugsweise flüssigen, Wärmeträgers.

Schließlich betrifft die Erfindung ein Verfahren zur Reinigung von mindestens einem Rohrbündelwärmetauscher, wobei mindestens eine erste Lochplatte, deren Löcher von den Rohren durchdrungen werden, entlang der Rohre bewegt wird,

Um die durch Verbrennung in einer Brennstelle entstehende Prozeßwärme einem Heizungssystem zuzuführen, werden Wärmetauscher im Verbrennungsraum oder im Abgasstrom benötigt. Meist werden diese Wärmetauscher im Abgasstrom angeordnet, wobei das Abgas heruntergekühlt wird und gleichzeitig ein Wärmeträger erhitzt wird, der den Wärmeinhalt zu den Verbrauchern, beispielsweise den Heizkörpern, transportiert. Für die kontrollierte Verbrennung ist eine ausreichende Luft- bzw. Sauerstoffzufuhr unabdingbar. Das entstehende Abgas, sogenanntes Rauchgas, wird durch eine Abgasanlage in die Umgebung abgegeben.

Um die Gefahren, die mit einem unkontrollierten Druckanstieg in der Abgasanlage verbunden sind, zu begrenzen, werden Rauchgaswärmetauscher, z.B. in Holzheizkesseln, in der Regel so groß dimensioniert, dass sie unter normalen Betriebsbedingungen frei brennen können, da insbesondere bei der Verbrennung von Holz schnell Beläge gebildet werden, die zum einen den Wärmeübergang stören und zum anderen die Strömungsquerschnitte soweit verengen, dass es zu einem unerwünschten Druckaufbau führen kann bis zum Verschluss der Strömungswege. Wenn der Belag mit Ruß und Teer auf die Stärke von einigen Millimetern angewachsen ist, steigt durch die schlechte Wärmeleitfähigkeit der Schicht die Oberflächentemperatur bei hohen Leistungen so weit an, dass ein Teil der Schicht wieder abbrennt. In diesem Zustand hat ein Wärmetauscher aber schon eine reduzierte Leistung.

Um solchen Betriebsstörungen entgegenzuwirken bietet die Firma Schräder Abgastechnologie einen Wärmetauscher mit Rippenrohren und einer optional erhältlichen Vorrichtung zum Spülen der Oberfläche mit Wasser an.

Die Firma Heizungskontor bietet einen Wärmetauscher an, einen sogenannten Heiko-Booster, der auch für Festbrennstoffe geeignet ist. Dieser soll aber mindestens jährlich mit speziellen Bürsten gereinigt werden.

Intercal bietet einen Wärmetauscher, genannt Econdens, für Öl- und Gaskessel an, der auch einmal jährlich gereinigt werden soll.

ODB-TEC bietet eine Beschichtung auf Nanomaterialbasis für Wärmetauscher an, die die Haftung von Verschmutzungen an der Tauscheroberfläche verringern soll.

Es gibt Lösungen, bei denen eine spezielle Oberflächenbeschichtung das Absetzen von Ruß und Teer verringern soll. Andere Konstruktionen versuchen das Problem mechanisch zu lösen.

Es gibt z. B. einen Wärmetauscher, bei dem das Abgas durch ein Rohrbündel geführt wird, in dem rotierende Reinigungsbürsten- oder Bleche angebracht sind.

Es gibt Wärmetauscher, bei denen eine zyklische Reinigung mit Wasser oder Dampf automatisch erfolgt.

DE 3618362 A1 beschreibt einen Rohrbündelwärmetauscher mit Reinigungsplatte, wobei die Rohre nicht als Doppelrohre ausgeführt sind. Die Reinigungsplatte ist eine Lochplatte deren Löcher notwendigerweise etwas größer sein müssen als der äußere Rohrdurchmesser. Nachteilig an dieser Lösung ist, dass diese Platte vor der Montage des Wärmetauscher eingesetzt wird und danach nicht mehr ersetzt werden kann.

Weitere Abgasanlagen und deren Teile sind aus > hier werden die Schriften des recherchierten Standes der Technik aus der Stammanmeldung eingefügt< bekannt.

Allen vorgeschlagenen Lösungen ist gemeinsam, daß sie einen hohen Wartungsaufwand erfordern, um die Leistung und Funktion der Heizungsanlage zu erhalten.

Es besteht somit ein dringendes Bedürfnis an Heizungsanlagen, insbesondere für Holzbrennstoffe, die es erlauben, auch über längere Betriebsperioden hinaus ein wartungsfreies Betreiben der Anlage zu ermöglichen, ein geringes Bauvolumen bei vergleichbarer Leistung und einen hohen Wirkungsgrad aufweisen.

[A01] Diese Aufgabe wird durch eine Abgasanlage für Brennstellen, insbesondere zur Verbrennung von Feststoffen, vorzugsweise zur Verbrennung von Holz, mit einem Wärmetauscher zur Erwärmung eines, vorzugsweise flüssigen, Wärmeträgers und einem Abgasrohr oder Kamin gelöst, bei der die Anlage einen Abzweig vom oder im Abgasrohr aufweist, in dem der Wärmetauscher und ein Abgasventilator angeordnet ist.

Der Wärmetauscher wird erfindungsgemäß in einem Nebenstromzweig angeordnet und ist mit einem eigenen elektrischen Saugzug, dem Abgasventilator, für den Abgasstrom im Nebenstromzweig versehen. Dadurch kann der Haupstrom ggf. geöffnet bleiben. Das Abgas wird aus dem Hauptstrom in den Wärmetauscher abgesaugt und entweder wieder in den Haupstrom zurückgeblasen oder über einen eigenen Weg weiter geleitet. Viele Festbrennstoffkessel sind mit einer Anheizklappe ausgestattet, die erst einige Zeit nach dem Anheizen geschlossen wird, wenn ein genügendes Glutbett für die Verbrennung entstanden und ausreichend Zug entstanden ist. Die Verbrennungsgase werden dann an dem Wärmetauscher vorbeigeführt. In diesem Betriebszustand wird nur die direkt an die Kesselwände abgegebene Wärme genutzt. Hohe Abgasverluste sind die Folge. Erfindungsgemäß werden diese Verluste verringert. Dadurch kann die Abgasanlage kleiner ausgelegt werden, da diesen höheren Verlusten nicht mehr Rechnung getragen werden muss.

Der Abzweig muß nicht als getrenntes Rohr vom Hauptabgasrohr abzweigen, sondern kann auch durch einen Strömungsquerschnitt im Hauptabgasrohr, z.B. durch ein Rohr im Rohr verwirklicht werden. Das innere Rohr saugt dann den Abgasstrom durch den Wärmetauscher.

[A02] In Ausgestaltung der Abgasanlage ist vorgesehen, dass der der Abzweig wieder in das Abgasrohr mündend ausgebildet ist, vorzugsweise unter einem Winkel von kleiner als 90° zum Abgasstrom im Abgasrohr. Wenn die Einleitung unter einem Winkel < 90° erfolgt, kann ein zusätzlicher Vortrieb für den Abgasstrom erzeugt werden, der für Anlagen mit Naturzug besonders vorteilhaft sein kann.

Alternativ kann Abzweigung des Nebenstrom und Wiedereinleitung auch innerhalb eines Rohres ausgeführt werden, wobei das Rohr teilweise innen in mindestens 2 Strömungsquerschnitte aufgeteilt ist, in denen die Aufteilung in Nebenstrom und Hauptstrom erfolgt. Die Wiedereinleitung des Nebenstrom erfolgt dann vorzugsweise in Richtung des Hauptstroms womit auch eine Zugunterstützung erreicht wird. Diese Ausführung erleichtert besonders die Montage bei Systemschornsteinen. Dabei kann der Wärmetauscher unterhalb des unteren Endes eines Außenkamins oder hinter der Brennstelle angeordnet werden.

Die Wiedereinleitung in den Hauptabgasweg erleichtert die Regelung des Lüfters, da die geförderte Luftmenge größer als die Abgasmenge sein kann und damit ein Teil vom Abgas mehrfach durch den Wärmetauscher geleitet wird. Dies vermeidet Verluste, die bei der Lösung mit einem eigenen Auslass für das Abgas entstehen, entweder durch den Auslass im Hauptabgaszweig entweichendes ungekühltes Abgas bei zu geringer Lüfterleistung oder unter Beimischung von kalter Luft von außen durch den Auslass des Hauptabgaszweigs bei zu hoher Lüfterleistung. Es besteht keine Notwendigkeit der Betriebsunterbrechung, wenn die Leistung des Wärmetauschers durch Belastung mit Ablagerungen nachlässt. Der Wärmetauscher kann auch mit reduzierter Leistung weiter betrieben werden. Bei Störungen kann die Wärmezufuhr durch Abschalten des Antriebs gestoppt werden. Die dafür nötige Steuerung ist einfacher und günstiger auszuführen als die Notkühlung mit thermischer gesteuerter Ablaufsicherung.

[A03] In weiterer Ausgestaltung der Abgasanlage für Brennstellen ist vorgesehen, dass der Wärmetauscher ein Abgasfilter aufweist. Durch die Anordnung im Nebenstrom ist es leichter möglich, den Wärmetauscher vorteilhaft mit einem Staubfilter zu kombinieren. Bei Filtern im Hauptstrom gibt es eine ähnliche Problematik wie bei Wärmetauschern. Infolge zunehmender Beladung des Filters entsteht ein Druckverlust, der unter Umständen Betriebsunterbrechungen nötig werden läßt.

[A04] In weiterer Ausgestaltung der Abgasanlage ist vorgesehen, dass der Wärmetauscher eine Spülvorrichtung aufweist. Eine solche Spülvorrichtung ist in der Lage, in Heizungspausen den Wärmetauscher und/oder die Filter mittels Spülflüssigkeit von anhaftenden Verunreinigungen zu befreien und den Wirkungsgrad der Abgasanlage wieder zu erhöhen.

[A05] In weiterer Ausgestaltung der Abgasanlage ist vorgesehen, dass der Abzweig eine elektrostatische Abgasreinigungsvorrichtung aufweist. Wenn die Abgasreinigungsvorrichtung bei dieser Ausgestaltung als Elektrofilter ausgeführt und in Strömungsrichtung vor den Tauschflächen angeordnet wird, können die Tauscherflächen mit Vorteil gleichzeitig als Abscheideelektrode dienen. Das Elektrofilter ist abgasseitig mit Vorteil vor den Tauschflächen angeordnet, so dass die Tauscherflächen gleichzeitig als Abscheideelektrode dienen. Ein Reinigungsmechanismus, der die Tauscherflächen reinigt, kann somit gleichzeitig auch die Abscheideelektrode reinigen. Vorteilhafter Weise wird der Reinigungsmechanismus so ausgebildet, dass er auch die Sprühelektroden reinigt. Beispielsweise können Bürsten vorgesehen werden, die so am Reinigungsmechanismus befestigt sind, dass sie die Sprühelektroden bei der Auf- und Abwärtsbewegung mit abbürsten. Weiterhin können separate Waschdüsen für die Sprühelektroden eingessetzt werden. Alternativ oder ergänzend können die Sprühelektroden dadurch gereinigt werden, dass sie durch durch Strom soweit erhitzt werden, dass anhaftender Kohlenstoff und Kohlenwasserstoff abbrennt. Dies ist bei isolierter Ausführung des Heizstromkreises, z.B. mit Transformator, auch im laufenden Betrieb möglich.

[A06] In weiterer Ausgestaltung der Abgasanlage ist vorgesehen, dass der Wärmetauscher als Rohrbündelwärmetauscher ausgebildet ist, dessen Rohre vorzugsweise senkrecht angeordnet sind und/oder eine Reinigungsvorrichtung zur Reinigung der Wärmetauscherfläche vorgesehen ist, die vorzugsweise als bewegliche Lochplatte ausgebildet ist, die insbesondere horizontal angeordnet ist, und wobei die Rohre des Wärmetauschers die Löcher der Platte durchdringend angeordnet sind.

Dadurch ist es möglich, dass der Schwerkraft folgende abgereinigte Anhaftungen im unteren Bereich eines Wärmetauschergehäuses gesammelt und abgetrennt werden können. Bei vertikaler Richtung der Rohre ist es leichter möglich, eine Reinigungsvorrichtung vorzusehen.

Die Reinigungsvorrichtung ist vorzugsweise ein Abstreifmechanismus, der im einfachsten Fall eine Lochplatte ist, durch die das Rohrbündel durchragt und die mechanisch bewegt wird und damit Verunreinigungen von der Rohroberfläche abstreift. Der Lochdurchmesser muß in diesem Fall etwas größer sein als der Durchmesser der Rohre, sodass ein geringer Ringspalt entsteht, um ein Blockieren zu verhindern. Bei dieser einfachsten Konstruktion kommt es noch zu dünnen Ablagerungen, die im Bereich des Ringspalts nicht abgestreift werden. Eine verbesserte Ausführung hat zwei oder mehrere übereinander liegende Lochplatten, die durch Federn horizontal zur Plattenebene gegeneinander und damit von verschieden Seiten gegen die Rohre gedrückt werden. Bei zwei Platten werden die Rohre dann zur Hälfte von den in jeweils einem Halbkreis anliegenden und auf den Rohren reibenden Platten gereinigt und zur anderen Hälfte von der anderen Platte, die gegen den übrigen Halbkreis reibt. Bei Verwendung von 3 oder 4 Platten hätte man dann drittel- oder viertelkreisförmigen Andruck der Platten.

Eine weitere Ausführung verwendet zwei Lochplatten, zwischen denen für jedes Rohr eine Ringfeder angebracht ist, die mit einem definierten Andruck das ganze Rohr abstreift, wenn die Platten bewegt werden.

Anstelle der Ringfeder können auch für jedes Rohr oder mehrere Rohre Schieber zwischen zwei Lochplatten angebracht sein, die durch Federkraft von verschiedenen Seiten gegen die Rohre drücken und diese Abstreifen. Rohre, Lochplatten, Ringfedern und Schieber sind vom Material her so gewählt, dass ein geringer Verschleiß an den Rohren zu erwarten ist, z.B. durch Verwendung von VA-Stahl oder Glas für die Rohre und Messing oder Kupfer für die daran reibenden Teile.

Eine weitere Ausführung des Reinigungsmechanismus verwendet Fasermaterial, das an die Tauscherrohre angedrückt wird, um die Verunreinigungen an den Tauscherrohren abzustreifen.

Einen wesentlichen Vorteil bietet eine Ausführung, bei der die Rohre als konzentrische Doppelrohre ausgebildet sind, bei denen beide Anschlüsse an einem Ende sind und das andere Ende des Rohres frei bleibt, wobei das äußere Rohr verschlossen ist.

Ausführungen mit einfachen Rohren und Anschlüssen an Kästen als Verteiler oder Sammler eines Wärmeträgers jeweils oben und unten, haben jedoch den Vorzug des geringeren Fertigungsaufwands.

In der ersten Ausführungsform ist es dadurch möglich, den Abstreifmechanismus bis zu dem freien Ende der Rohre zu bewegen, so dass Verunreinigungen über die Rohrenden hinweg abgestreift werden können. Da die Rohre nur an einer Seite mit dem Kasten verbunden sind, ist eine leichte Montage und Demontage des Abstreifmechanismus möglich. Da die Doppelrohre nur an einem Ende befestigt sind, können sie weitaus mehr federn und sich an die im Toleranzbereich unterschiedliche Position der Löcher in der Lochplatte anpassen.

Als koaxiale Doppelrohre sind die Rohre folglich so ausgeführt sind, dass ein Ende der Rohre aussen frei bleibt und in diesem Ende das Wärmeträgermedium vom inneren ins äußere Rohr oder umgekehrt überströmt und beide Anschlüsse am anderen Ende ausgeführt sind.

Der Anschluß ist mit einem Kasten ausgeführt, die Kanäle enthalten, mit denen das Wärmeträgermedium auf die einzelnen Rohre verteilt wird.

[A07] Deshalb ist mit Vorteil vorgesehen, dass zur Verteilung eines Wärmeträgermedium auf die Rohre mindestens ein Kasten mit einer den Rohren zugewandten Gehäuseplatte vorgesehen ist, die sandwichartig aus mindestens zwei festeren und einer dazwischen angeordeten elastischen Lage bestehend ausgebildet ist.

Die Abdichtung der Rohre kann zur Gehäuseplatte hin in einer ersten Ausführung dadurch erfolgen, dass zwischen der ersten und der zweiten swandwichartig angeordneten Platte an jeder Stelle, an der die Rohre durch die zwei Platten stecken, ein 0-Ring aus elastischem Material vorgesehen ist. Die 0-Ringe zwischen den Platten werden durch Schrauben zusammengepress und dadurch an die Rohre angedrückt. Dabei können die Bohrungen der Platten dort, wo der 0-Ring liegt, mit einer Fase ausgeführt sein. Die äußeren Rohre können mit einer Ringnut ausgeführt werden, in der der 0-Ring anliegt und zwischen den zwei Platten angepresst wird, um die Rohre zu fixieren und gleichzeitig die Montage zu erleichtern.

Wenn in einem alternativen Aufbau die Anschlussplatte sandwichartig aus mindestens zwei festeren und einer dazwischen angeordeten elastischen Lage bestehend ausgebildet ist, erspart man sich die Montage vieler Dichtringe. Die zwischen zwei festeren Platten angeordnete elastische Dichtungslage ist aus einem Material, das nicht wesentlich im Volumen komprimiert werden kann. Der sandwichartige Plattenstapel wird durch Schrauben zusammengepresst und die Dichtungslage wird durch den Druck so verformt, das sich die Löcher, durch die die Rohre hindurch ragen, versuchen zu schließen und das Material somit an die Rohre gedrückt wird. Dadurch wird die Abdichtung erreicht. Um ein Ausweichen des Dichtungsmaterials am Rand des Plattenstapels zu vermeiden, kann dort ein Rahmen angeordnet sein, der das Ausweichen des Dichtungsmaterials begrenzt. Dieser kann vorzugsweise mit dem Plattenstapel zusammen verschraubt sein. Die elastische Dichtungslage verformt sich nicht dauerhaft und daher kann der Wärmetauscher leicht zerlegt und wieder zusammengesetzt werden, wobei die Dichtungslage wieder verwendet werden kann.

Die Kanäle in dem Kasten sind so ausgeführt, dass eine Reihenschaltung von einzelnen Rohrreihen entsteht und ein Gegenstromprinzip erreicht werden kann.

Mit Vorteil wird eine Entlüftungsmöglichkeit für jede Reihe vorgesehen.

Diese Entlüftung kann alternativ auch dadurch erreicht werden, indem die einzelnen Reihen an der ober Seite der Kanäle durch einen Spalt verbunden werden, der klein genug ist, um die Reihenschaltung nicht wesentlich zu stören, aber für die Entlüftung ausreichend ist, so dass dann nur noch eine Entlüftungsöffung nach aussen nötig ist.

Darüber liegt ein Stapel Platten, der ausgefrässte oder anders gearbeitete Kanäle für die Verbindung der äußeren Rohre hat. Die inneren Rohre sind länger und ragen durch diese Platte hindurch in eine Trennplatte. Darauf liegt eine Platte mit der Verteilung für die inneren Rohre und zum Abschluß eine Deckplatte. Die Kanäle sind so angeordnet, dass das Wärmeträgermedium zunächst eine Reihe der Rohre durchströmt, bevor es jeweils zur nächsten Reihe von Rohren kommt. So wird erreicht, dass der Wärmetauscher als Gegenstromwärmetauscher arbeiten kann, d.h. dass vorgewärmtes Wärmeträgermedium an der heißen Seite des Gaseintritts in den Wärmetauscher eintritt und, kaltes Wärmetauschermedium am gasseitigen Austritt den Wärmetauscher verläßt.

Zwischen den Platten können jeweils Dichtungen angebracht sein. Die beiden äußeren Platten sind so ausgeführt, das sie dem Betriebsdruck der Anlage standhalten können. Der ganze Plattenstapel ist durch Schrauben zusammengepresst, die so ausgelegt werden, dass sie ebenfalls den Betriebsdruck standhalten können und den Stapel genügend fest zusammenpressen, um ihn nach außen abzudichten. Zwischen den inneren und äußeren Kanälen ist keine vollständige Abdichtung nötig, daher müssen die inneren Rohren nicht in der Trennplatte und Verteilerplatte eingeklebt oder verlötet werden; es reicht, wenn sie in passende Bohrungen gesteckt sind. Daher lässt sich der ganze Verteiler auch leicht demontieren, falls das zu Wartungszwecken nötig sein sollte.

[A08] In weiterer Ausgestaltung der Abgasanlage ist vorgesehen, dass ein Spülflüssigkeitsammler vorgesehen ist und ein Kreislauf mit einer darin angeordneten Pumpe sowie ggf. ein Spülflüssigkeitsreservoir vorgesehen ist, wobei die Spülflüssigkeit vorzugsweise Reaktionspartner für Abgasbestandteile enthält. Dabei kann entweder Wasser von außen über ein gesteuertes Ventil zugeführt werden, bis der gewünschte Pegel in dem Flüssigkeitsreservoir erreicht ist, oder der Reinigungszyklus so gesteuert werden, dass eine Ergänzung der Spülflüssigkeit nur in großen Intervallen oder gar nicht notwendig ist..

Ein Abfluss von überschüssiger Waschflüssigkeit ist mit Hilfe eines Überlaufs oder einer Pumpe in das Abwassersystem möglich.

Die Massnahme, dass die Spülflüssigkeit Reaktionpartner für Abgasbestandteile enthält, verbessert wesentlich die Reinigungswirkung der Spülflüssigkeit. Als Reinigungsflüssigkeit wird mit Vorteil Wasser, eine alkalische Lösung, z.B. NaOH oder eine seifenhaltige Lösung verwendet.

Bei Heizungen und Öfen mit automatischer Brennstoffzufuhr, wie mit Holzpellets oder Hackschnitzeln, lässt sich der Verbrennungsvorgang weitgehend regeln und daher die Schadstoffmenge im Abgas reduzieren. Daher sind dort weniger unverbrannte Kohlenwasserstoffe enthalten, als bei der Verbrennung von Stückholz. Das trifft auch für Holzvergaserkessel und - Öfen zu. Solche Anlagen sind teilweise mit Vorrichtungen versehen, bei denen die Ablagerungen trocken entfernt werden. Bei anderen Öfen, die mit Stückholz betrieben werden, z.B. Kaminöfen und Kamineinsätze, Kachelöfen, Holzherde u.s.w., kommt es wegen der nicht geregelten Verbrennung dazu, dass in Teilen der Flamme Sauerstoffmangel herrscht oder die Flamme zu früh abgekühlt wird. Dann entstehen unverbrannte Kohlenwasserstoffe, die sich zusammen mit Kohlenstoffpartikeln zu einer festen Schicht verdichten können, sogenannter Glanzruß. Diese Ablagerungen können relativ hart und abriebbeständig sein. Eine Möglichkeit der Entfernung besteht durch Verseifen und damit wasserlöslich machen der Kohlenwasserstoffe. Die Ablagerungen weichen dann auf, werden aber erfahrungsgemäß nicht vollständig aufgelöst. Zur Reinigung ist zusätzlich wenigstens geringe mechanische Arbeit nötig, entweder durch Bürsten oder ähnliches oder Erreichen einer genügenden starken Bewegung der alkalischen Waschlösung, z.B. durch Besprühen.

[A09] In weiterer Ausgestaltung der Abgasanlage ist vorgesehen, dass die Lochplatte mindestens einen Antrieb aufweist, der einen automatischen Reinigungszyklus abfahrend ausgebildet ist. Eine erfindungsgemäße Lochplatte wird durch mindestens 3 Gewindespindeln in Richtung der Rohre hin und her bewegt. Die Lochplatte hat am äußeren Rand einen Rahmen, der das Abfließen von Waschflüssigkeit zur Seite verhindert. Bei dieser Ausführung ist das Rohrbündel weitgehend vertikal angeordnet und das Lochblech horizontal. Der Rahmen bildet mit dem Lochblech also eine Art Wanne, die mit Waschflüssigkeit gefüllt werden kann. Die Löcher im Blech haben ein etwas größeres Maß als der Außendurchmesser der Rohre. Die Waschflüssigkeit strömt durch diesen Spalt nach unten. Dadurch wird die zur Reinigung notwendige Bewegung direkt an der Oberfläche der Rohre erreicht und auch über den gesamten Umfang des jeweiligen Rohrabschnitts, an dem sich das Lochblech gerade befindet. Durch die Bewegung des angetriebenen Lochblechs wird die gesamte Länge der Rohre soweit nach diesem Prinzip gereinigt, wie die Bewegung reicht. Zusätzlich werden sowohl die Berührungsflächen zwischen Tauschrohroberfläche und Rohren, die sich aus Toleranzen und Verbiegung von Rohren ergeben können, als auch die Gewindespindeln und dazugehörigen Spindelmuttern von der Reinigungsflüssigkeit geschmiert, sodaß Verschleiß und Geräuschentwicklung reduziert werden. Die Spindelmuttern sind dabei so angeordnet, dass sie bei gefüllter Lochblechwanne überflutet werden. Das Füllen der Wanne kann durch eine Pumpe erreicht werden, die die Reinigungsflüssigkeit fördert. Weiterhin kann die Wanne auch durch Eintauchen in Waschflüssigkeit gefüllt werden, die hoch genug im unteren Teil des Wärmetauschergehäuses mit dem Rohrbündel steht, um in der untersten Stellung die Lochblechwanne zu fluten.

Alternativ kann der Antrieb auch über eine Hydraulik erfolgen. Die Rohbündel können auch horizontal oder in beliebiger Lage angeordnet sein und/oder der Reinigungsmechanismus 2 Lochplatten mit einem Abstand aufweisen, damit er daher in beliebiger Lage arbeiten kann. Wenn als Reinigungsflüssigkeit ein Aufguss aus Holzasche verwendet wird, verstärkt die abrasive Wirkung der Ascheteilchen die Reinigungswirkung.

[A10] Zur weiteren Verringerung der Betriebskosten ist in weiterer Ausgestaltung der Abgasanlage vorgesehen, dass mindestens ein Niveausensor mit einer Wirkverbindung zu einer Steuerung vorgesehen ist, wobei die Steuerung in Abhängigkeit des Niveaus den Reinigungszyklus beeinflussend ausgebildet ist

Statt der Ausführung, bei der der Spülflüssigkeitskreislauf von aussen gespeist wird, kann bei Vorsehen von geeigneten Sensoren in Verbindung mit einer entsprechenden Steuerung auch mit einem nach außen abgetrennten Wasserkreislauf gearbeitet werden.

Dabei kann ein Behälter verwendet werden, in dem sich die festen Bestandteile des abgewaschenen Belags der Tauscherflächen absetzen. Dazu wird ein Teil der Waschflüssigkeit mit Pumpen in den Behälter gefördert und verbleibt dort ausreichend lange, um im unteren Bereich des Behälters enthaltene Stoffe zu sedimentieren. Danach wird aus einem höher liegenden Teil des Behälter wieder Waschflüssigkeit, jetzt weitgehend ohne die festen Bestandteile, wieder zurück in das Reservoir im Wärmetauscher gefördert.

Dieser Vorgang wird zyklisch wiederholt, wobei sich der untere Teil des Behälters mehr und mehr mit Sediment füllt. Durch Austausch des Behälters besteht die Möglichkeit einer kontrollierten Entsorgung des Sediments. Bei der Verbrennung von Scheitholz gibt es nämlich sehr unterschiedliche Phasen und Betriebszustände, bei denen entweder durch Verdunstung Wasser aus dem Reservoir verloren geht oder durch Kondensation die Wassermenge im Umlauf ansteigt. Damit das System trotzdem über eine längere Zeit ohne Zufuhr oder Abfluss von Wasser zu betreiben ist, gibt es folgende Möglichkeit den Wasserstand zu kontrollieren:

Wenn der Wasserstand höher als auf ein gewünscht Niveau ansteigt, wird der Reinigungsmechanismus betätigt, was, insbesondere in der späten Abbrandphase, in der das im Holz vorhandene Wasser schon verdampft ist und die meisten Kohlenwasserstoffe verbrannt sind, zu zusätzlicher Verdunstung von Wasser führt. Wenn der Wasserstand geringer als gewünscht ist, kann die Betätigung des Reinigungsmechanismus auf Zeiten beschränkt werden, in denen der Ofen schon abgekühlt ist. Dabei wird die Verdunstung des Wasser auf ein Minimum beschränkt. So lässt sich durch entsprechende Erfassung des Wasserstandes mittels Sensoren und geeigneter Steuerung, z.B. mittels eines Mikroprozessors, der Wasserstand kontrollieren.

Die Kosten für Speisewasser können somit verringert werden.
..

[A11] Die Wartung der Anlage wird wesentlich erleichtert, wenn die Abgasanlage für Brennstellen als Block mit einem oberen Teil zur Abgasführung und einem unteren Teil mit Wärmetauscher und vorzugsweise mit Abgasventilator geteilt ausgebildet ist. Dann kann zu Zwecken der Wartung nämlich der untere Teil einfach abgenommen und beispielsweise als Block ausgetauscht werden. Zusätzlich ergeben sich durch diesen Aufbau universelle Einbaumöglichkeiten. Der obere Teil dient dabei durch geeignete Einbauten der Abgasführung, so dass das Abgas von einer Seite von oben in den unteren Teil eintritt, dann horizontal durch den Wärmetauscher geführt wird, um dann an der anderen Seite vertikal durch den Abgasventilator in den oberen Teil eintritt. Der Anschluß des oberen Teils an die Abgasleitung kann dann in 2 Strömungsquerschnitte geteilt sein, so dass durch ein Rohr im Rohr der obere Teil auch direkt hinter einer Brennstelle oder unterhalb eines Aussenkamins angeordnet werden kann. Der kleinere Querschnitt dient dann zum Zurückleiten des abgezweigten Abgasstromes in das Hauptabgasrohr, während der übrige Querschnitt zum Ansaugen des abgezweigten Abgases in den unteren Teil dient. Im oberen Teil werden die beiden Strömungsquerschnitte der Gasströme an die beiden Seiten des Wärmetauschers angeschlossen.

Eine bevorzugte Ausführungsform der Erfindung wird beispielhaft an Hand einer Zeichnung erläutert. Weitere vorteilhafte Merkmale lassen sich den Figuren der Zeichnung entnehmen. Funktionsgleiche Teile sind mit gleichen Bezugsziffern versehen.

Die Figuren der Zeichnung zeigen im Einzelnen:
- Figur 1: ein Rohrleitungschema der erfindungsgemäßen Anlage,
- Figur 2: eine perspektivische Ansicht des Wärmetauschers mit vertikal verstellbarer Lochplatte,
- Figur 3: eine perspektivische Ansicht des Wärmetauschers nach Figur 2 jedoch mit geöffnetem Verteiler,
- Figur 4: eine perspektivische Ansicht eines Details des Wärmetauschers nach Figur 2 und 3,
- Figur 5: einen Vertikalschnitt durch ein Detail eines unteren Kastens,
- Figur 6: einen Vertikalschnitt durch ein Detail einer Lochplatte ,
- Figur 7: eine Aufsicht auf das Detail einer Lochplatte gemäß Figur 6.

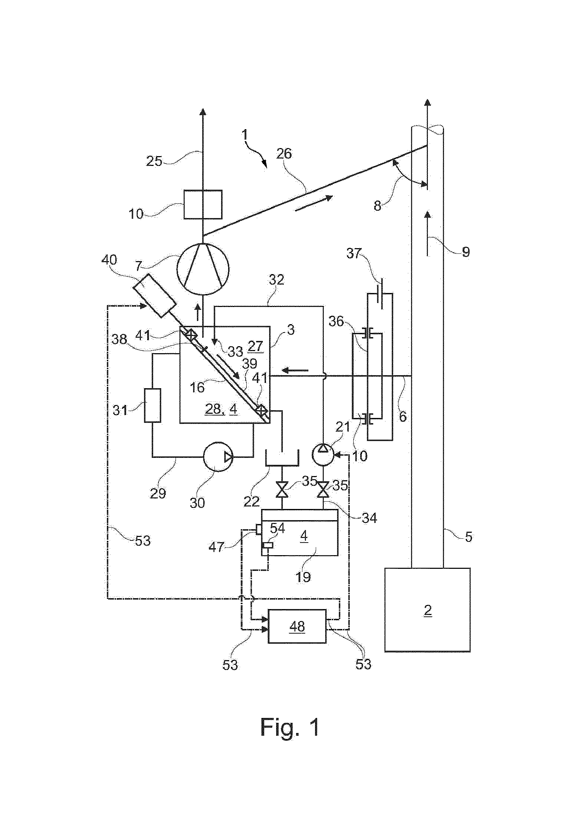

In Figur 1 bezeichnet die Bezugsziffern 1 eine erfindungsgemäße Abgasanlage. Aus der Brennstelle 2 wird ein Abgasstrom 9 durch das Abgasrohr 5 in die Umgebung geleitet. Vom Abgasrohr 5 wird der Abgasstrom 9 ganz oder teilweise über einen Abzweig 6 in eine elektrostatische Abgasreinigungsvorrichtung 12 und anschließend in einen Wärmetauscher 3 geführt. Das gereinigte und abgekühlte Abgas verlässt diesen über den Abgasventilator 7 und ein Abgasfilter 10 entweder durch eine getrennte Abgasleitung 25 oder über die Abgasrückführleitung 26 zurück in den Abgasstrom 9 unter einem Winkel 8, der vorzugsweise kleiner als 90° ist.

Der Wärmetauscher 3 wird also auf seiner Primärseite 27 von Rauchgas durchströmt, während auf der Sekundärseite 28 der Wärmetauscher 3 von einem flüssigen Wärmeträger 4 durchströmt wird. Der flüssige Wärmeträger 4 wird im Kreis geführt. Zu Bildung dieses Kreislaufes ist ein Heizkreis 29 vorgesehen, in dem eine Zirkulationspumpe 30 und als Wärmeverbraucher ein Heizkörper 31 schematisch angedeutet sind.

Der Wärmeaustausch zwischen dem primären Wärmeträgermedium, dem Rauchgas, und den sekundären Wärmeträgermedium 4, dem Heizungswasser, erfolgt über die Wärmetauscherfläche 16.

Die Wärmetauscherfläche 16 ist auf der Primärseite 27 des Wärmetauschers 3 mit Rauchgas beaufschlagt und versottet deshalb relativ schnell. Dadurch wird der Wärmeübergang zwischen Rauchgas und Heizungsflüssigkeit behindert. Zum Reinigen und Spülen dieser Wärmetauscherfläche 16 ist ein Spülflüssigkeitskreislauf 32 vorgesehen. Dieser besteht aus einem Spülflüssigkeitsreservoir 19, einer Spülflüssigkeitspumpe 21, Spülflüssigkeitsdüsen 33 und einem Spülflüssigkeitssammler 22. Aus dem Spülflüssigkeitsreservoir saugt die Pumpe 21 über die Ansaugleitung 34 und Ventil 35 Spülflüssigkeit an und drückt sie durch die Spülflüssigkeitsdüsen 33 auf die zu reinigende Wärmetauscherfläche 16. Durch Ablaufen an der Wärmetauscherfläche 16 beläd sich die Spülflüssigkeit mit Rauchgasbestandteilen und wird nach Ablaufen von der Wärmetauscherfläche 16 in dem Sammler 22 aufgefangen. Von dort gelangt die beladene Spülflüssigkeit über ein weiteres Ventil 35 wieder zurück in das Spülflüssigkeitsreservoir 19. Dieses kann bei Bedarf ausgetauscht werden. Dazu dienen die Ventile 35. Alternativ kann Pumpe 21 die Spülflüssigkeit auch direkt aus dem Sammler 22 ansaugen.

Statt einer Ausführung, bei der der Spülflüssigkeitskreislauf von aussen gespeist wird, kann, wie in Figur 1 gezeigt, bei Vorsehen von geeigneten Sensoren 47 in Verbindung mit einer entsprechenden Steuerung 48 auch mit einem nach außen abgetrennten Wasserkreislauf 32 gearbeitet werden.

Dabei kann ein Behälter 4 verwendet werden, indem sich die festen Bestandteile des abgewaschenen Belags der Tauscherflächen absetzen. Dazu wird ein Teil der Spülflüssigkeit mit Pumpe 21 in den Behälter gefördert und verbleibt dort ausreichend lange, um im unteren Bereich des Behälters 4 enthaltene Stoffe zu sedimentieren. Danach wird aus einem höher liegenden Teil des Behälter wieder Spülflüssigkeit 24, jetzt weitgehend ohne die festen Bestandteile, wieder zurück im Kreis gefördert.

Dieser Vorgang wird zyklisch wiederholt, wobei sich der untere Teil des Behälters mehr und mehr mit Sediment füllt. Durch Austausch des Behälters besteht die Möglichkeit einer kontrollierten Entsorgung des Sediments. Bei der Verbrennung von Scheitholz gibt es nämlich sehr unterschiedliche Phasen und Betriebszustände, bei denen entweder durch Verdunstung Wasser aus dem Reservoir verloren geht oder durch Kondensation die Wassermenge im Umlauf ansteigt. Damit das System trotzdem über eine längere Zeit ohne Zufuhr oder Abfluss von Wasser zu betreiben ist, gibt es folgende Möglichkeit den Wasserstand zu kontrollieren:

Wenn der Wasserstand höher als auf ein gewünscht Niveau ansteigt, was Sensor 47 dedektiert, wird von Steuerung 48 über Wirkverbindung 53 der Reinigungsmechanismus betätigt, was, insbesondere in der späten Abbrandphase, in der das im Holz vorhandene Wasser schon verdampft ist und die meisten Kohlenwasserstoffe verbrannt sind, zu zusätzlicher Verdunstung von Wasser führt. Wenn der Wasserstand geringer als gewünscht ist, was von Sensor 54 erfasst wird, kann die Betätigung des Reinigungsmechanismus auf Zeiten beschränkt werden, in denen der Ofen schon abgekühlt ist. Dabei wird die Verdunstung des Wasser auf ein Minimum beschränkt. So lässt sich durch entsprechende Erfassung des Wasserstandes mittels Sensoren 47 und 54 und geeigneter Steuerung 48, z.B. mittels eines Mikroprozessors, der Wasserstand kontrollieren.

In dem Abzweig 6 ist vorzugsweise vor dem Wärmetauscher 3 noch eine elektrostatische Abgasreinigungsvorrichtung 12 vorgesehen. Diese Abgasreinigungsvorrichtung 12 kann auch in Baueinheit mit dem Wärmetauscher 3 ausgebildet sein. Beispielsweise kann das Rauchgas auf der Eintrittseite in den Wärmetauscher 3 durch Sprühelektroden 36, die der Übersichtlichkeit halber nur schematisch gezeichnet sind, aufgeladen werden und anschließend auf der entgegengesetzt gepolten Wärmetauscherfläche 16 abgeschieden werden. Mittels einer Stromquelle 37 können die Sprühelektroden 36 so beheizt werden, dass etwaige Ablagerungen verbrannt werden können.

Zusätzlich ist es möglich, die Wärmetauscherfläche 16 mittels eines Kratzers 38 mechanisch von Belegen zu befreien. Dazu wird der Kratzer 38 mittels einer axial fest gelagerten Spindel 39 von einer Spindelmutter bewegt. Dies kann von Steuerung 48 zyklisch erfolgen. Dabei wird der Kratzer von einem Antrieb 40 über die Wärmetauscherfläche 16 mechanisch bewegt. Die Spindel ihrerseits ist in Lagern 41 drehbeweglich aber axial fest gelagert.

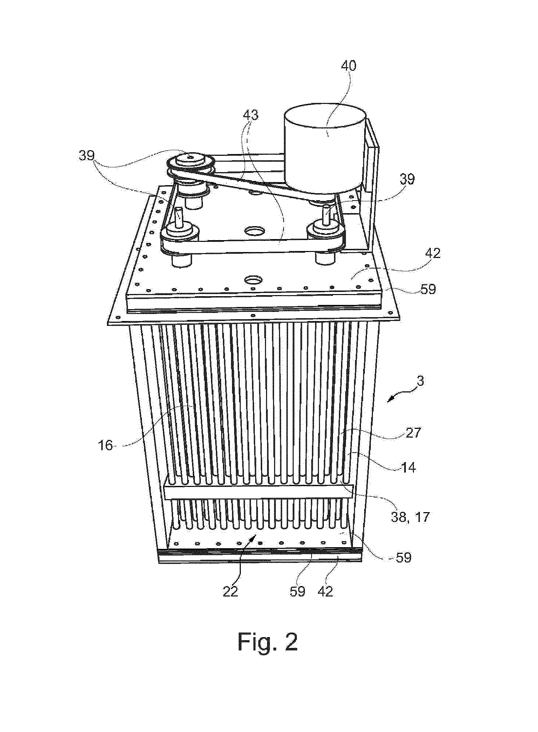

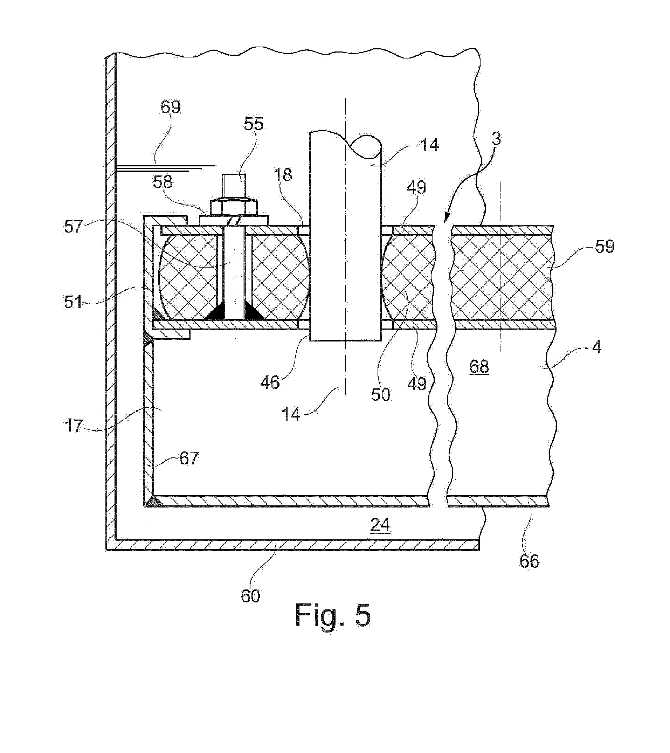

In Figur 2 ist in perspektivischer Ansicht ein erfindungsgemäßer Rauchgaswärmetauscher ohne sein Gehäuse dargestellt. Es handelt sich dabei um einen so genannten Rohrbündelwärmetauscher, bei dem die Primärseite 27 des Wärmetauschers 3 als vertikal stehende Rohre 14 ausgebildet sind, die von der Wärmeträgerflüssigkeit des Heizkreises 29 durchflossen werden. Die Rohre 14 werden dabei vom Rauchgas umströmt. Als Kratzer 38 ist eine Lochplatte 17 vorgesehen. Im unteren Teil des Wärmetauschers dient der untere Kasten 42 dem Anschluss der Rohre 14. Die Rohre 14 münden an ihren Enden in Kästen 42, die dazu dienen, den Wärmeträger 4 auf die Rohre 14 zu verteilen, oder den austretenden Wärmeträger 4 zu sammeln. Zum Reinigen der Wärmeaustauschfläche 16 kann die Lochplatte 17 vertikal über mindestens drei Spindeln 39 verstellt werden, die von einem gemeinsamen Antrieb 40 über Zahnriemen 43 synchron angetrieben werden. Das nicht dargestellte Gehäuse 60 (Figur 5) des Wärmetauschers dient dabei als Spülflüssigkeitssammler 22.

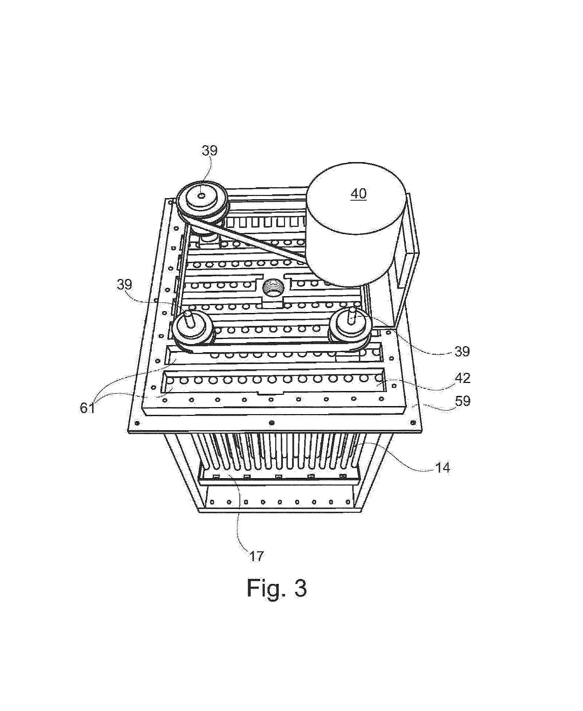

In Figur 3 ist der obere Kasten 42 geöffnet dargestellt. Man erkennt, dass die Rohre 14 einer Anzahl von Kanälen 61 registerweise zugeordnet sind. Auf diese Weise können die Kanäle 61 mit ihren Rohren 14 so geschaltet werden, dass ein Wärmeaustausch im Gegenstrom erfolgen kann.

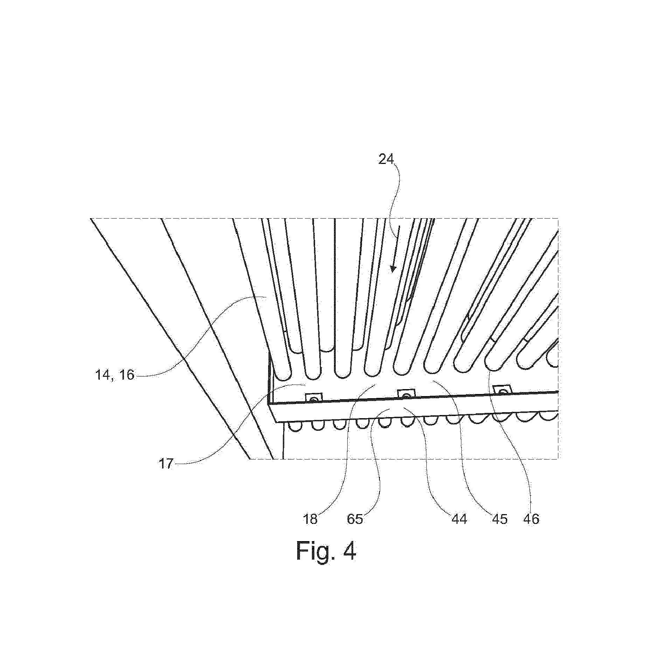

In Figur 4 ist ein Detail der Lochplatte in perspektivische Ansicht gezeigt. Die Lochplatte 17, deren Löcher 18 die Rohre 14 mit ihren Wärmetauscherflächen 16 umgreifen, ist an ihren Außenkanten mit Wandlungen 44 versehen, so dass in der dadurch gebildeten Wanne 45 die Spülflüssigkeit 24 aufgefangen werden kann. Die Spülflüssigkeit 24 tritt infolge des notwendigen Spiels zwischen Loch 18 und Rohr 14 durch die Ringspalten 46 hindurch und erleichtert dadurch die mechanische Abreinigung der Wärmetauscherflächen 16 beim vertikalen Verstellen der Lochplatte 17. Gleichzeitig dient sie zur Schmierung von Gewindemuttern 62, in denen sich die Gewindespindeln 39 drehen und Lochplatte 17 bewegen. Dazu sind die Gewindemuttern 62 mit Schlitzen 63 oder Bohrungen versehen, über die die Spülflüssigkeit an das Gewinde 64 gelangt, auch wenn der Flüssigkeitstand in der von Rand 65 gebildeten Wanne 45 schon soweit abgesunken ist, dass die Flüssigkeit nicht mehr von oben auf die Gewindemuttern fließen kann.

Figur 5 zeigt im Vertikalschnitt durch ein Detail einer Gehäuseplatte 59 des unteren Kastens 42 zum Anschluß der Rohre 14 und zum Sammeln des Wärmeträgermediums gezeigt. Dies ist eine bevorzugte Ausgestaltung der Abdichtung eines Lochs 18 der Gehäuseplatte 59 zum Rohr 14. Dabei wird die Abdichtung zum Rohr 14 durch die Verwendung einer elastischen, gelochten Platte 50 erreicht, die zwischen zwei festen Platten 49 angeordnet ist, wobei die Rohre 14 diesen Stapel durchdringen. Diese elastische Dichtungslage 50 ist aus einem Material, das nicht wesentlich im Volumen komprimiert werden kann. Der Plattenstapel, d.h. die Gehäuseplatte 59 wird durch Schrauben 55 zusammengepresst und die Dichtungslage 50 wird durch den Druck so verformt, dass sich die Löcher 18, durch die die Rohre 14 hindurch ragen, zu schließen versuchen, und das Material somit an die Rohre 14 gedrückt wird. Die Schrauben 55 sind als Stehbolzen 57 gestaltet, die an einem Ende durch eine Schweißung 58 mit der unteren festen Platte 49 verschweißt sind. Durch Verdrehen einer auf dem anderen Ende des Stehbolzens 57 vorgesehenen Mutter 58 kann der nötige Druck auf die elastische Platte 50 erzeugt werden. Dadurch wird die Abdichtung erreicht. Um ein Ausweichen des Dichtungsmaterials 50 am Rand der Lochplatte 17 zu vermeiden, kann dort ein Rahmen 51 angeordnet sein, der das Ausweichen des Dichtungsmaterials 50 begrenzt. Dieser kann vorzugsweise mit dem Plattenstapel zusammen verschraubt sein. Die elastische Dichtungslage 50 verformt sich nicht dauerhaft und daher kann der Wärmetauscher leicht zerlegt und wieder zusammengesetzt werden, wobei die Dichtungslage wieder verwendet werden kann. Durch diese Konstruktion kann die Monatge einzelner Dichtungsringe vermieden werden.
Kasten 42 wird durch die oben beschriebene Gehäuseplatte 59, eine weitere geschlossene Platte 66 und die umlaufende Wandung 67 gebildet. In dem so gebildeten Raum 68 können verschiedene Kanäle vorgesehen werden, um die Rohre 14 zu Gruppen strömungstechnisch zu vereinigen.

Der Wärmetauscher 3 ist an der oberen Gehäuseplatte 59 in ein flüssigkeitsdichtes Wärmetauschergehäuse 60 eingehängt, in dessen Bodenbereich die Spülflüssigkeit 24 gesammelt wird. Der Spiegel 69 der Spülflüssigkeit 24 sollte die Gehäuseplatte 59 nur gering überdecken, um die Wärmetauscherfläche nicht zu verringern.

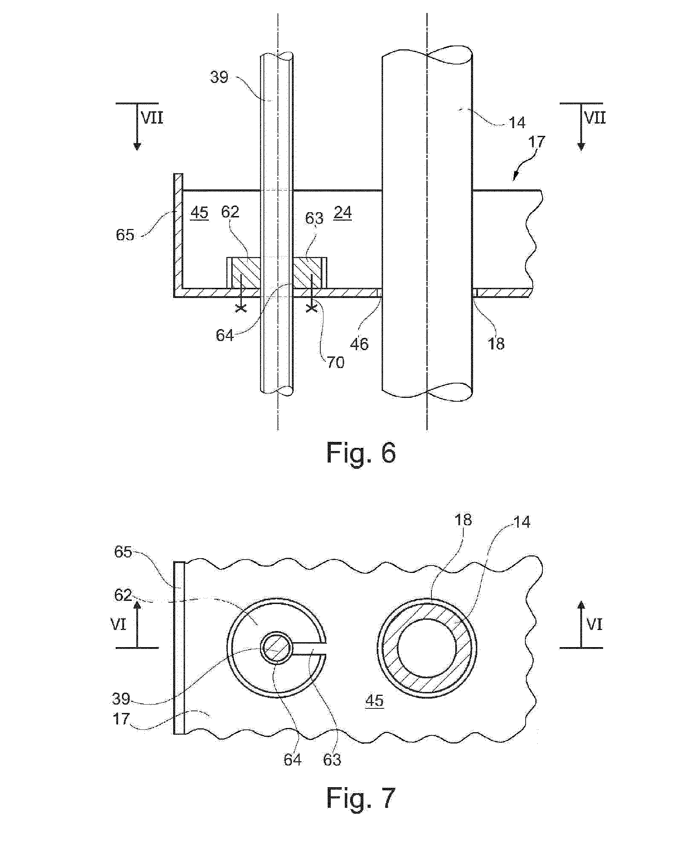

In den Figuren 6 und 7 sind Details der Lochplatte dargestellt. Die Lochplatte 17 ist von Rohren 14 durchsetzt. Dazu sind Löcher 18 vorgesehen, deren Ringspalt zum Rohr 14 so eng bemessen ist, das die Oberfläche der Rohre von den Kanten der Löcher 18 gereinigt werden, sobald die Platte vertikal bewegt wird.

Für diese Bewegung sind in der Lochplatte 17 mindestens drei senkrecht zur Platte angeordnete Gewindespindeln 39 vorgesehen, die bei Drehung die in das Gewinde 64 eingreifenden Gewindemuttern 62 verstellen, weil die Muttern 62 mittels Schrauben 70 fest mit der Lochplatte 17 fest verbunden sind.

Zur Schmierung dieser Muttern 62 und zur Reinigung des Gewindes 64 sind die Muttern 62 mit jeweils einem Schlitz 63 versehen, so dass Spülflüssigkeit 24 bis zum Gewinde 64 vordingen kann. Lochplatte 17 bildet mit dem Rand 65 eine Wanne 45, in der die Spülflüssigkeit teilweise gesammelt wird und durch den Ringspalt 46 zwischen Rohr 14 und Platte 17 austritt.

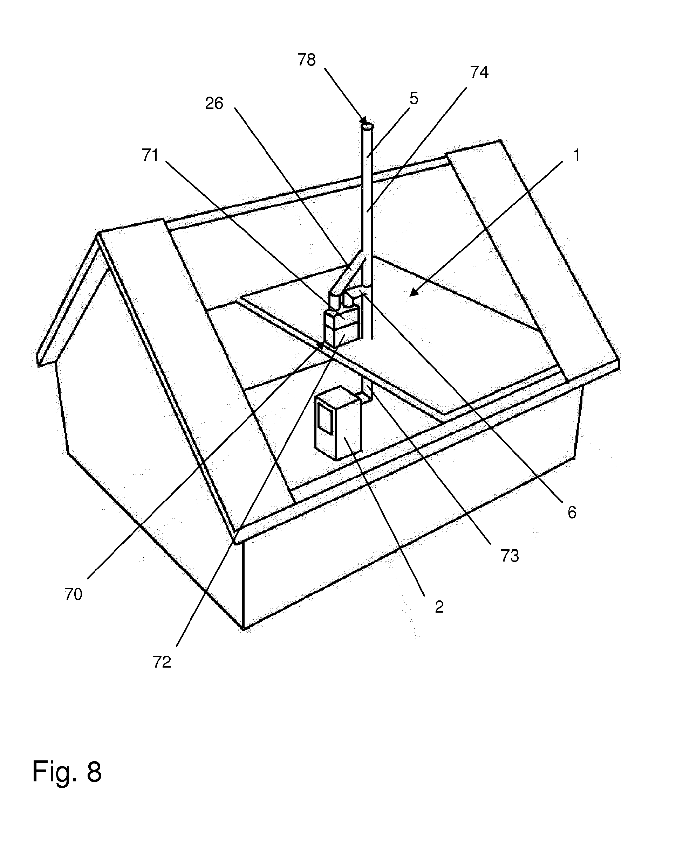

Figur 8 zeigt eine Anordnung der Abgasanlage auf dem Dachboden eines Hauses. Die Brennstelle 2 ist im Erdgeschoss gezeigt. Die als Block 70 ausgebildete, d.h. in einer Baueinheit zusammengefasste Abgasanlage 1 befindet sich ein Geschoss über der Brennstelle. Die Abgasleitung 5 teilt sich somit in einen Leitungsabschnitt 73 zwischen der Brennstelle 2 und dem Abzweig 6 und in einen Leitungsabschnitt 74 zwischen Abzweig 26 und Abgasaustrittöffnung 78. Der Block 70 ist horizontal geteilt in einen unteren Blockteil 72 und einen oberen Blockteil 71. Der obere Blockteil 71 ist mit geeigneten Einbauten versehen, um das angesaugte Abgas auf einer Seite vertikal nach unten in den unteren Teil 72 zu leiten. Dort wird das Abgas horizontal durch den Wärmetauscher geführt, um diesen auf der anderen Seite vertikal nach oben zu verlassen und in den oberen Teil vom Abgasventilator getrieben einzutreten. Im oberen Teil wird der gekühlte Abgasstrom durch die Abgasrückführleitung 26 zurück in den Abschnitt 74 hinter dem Abzweig geleitet.

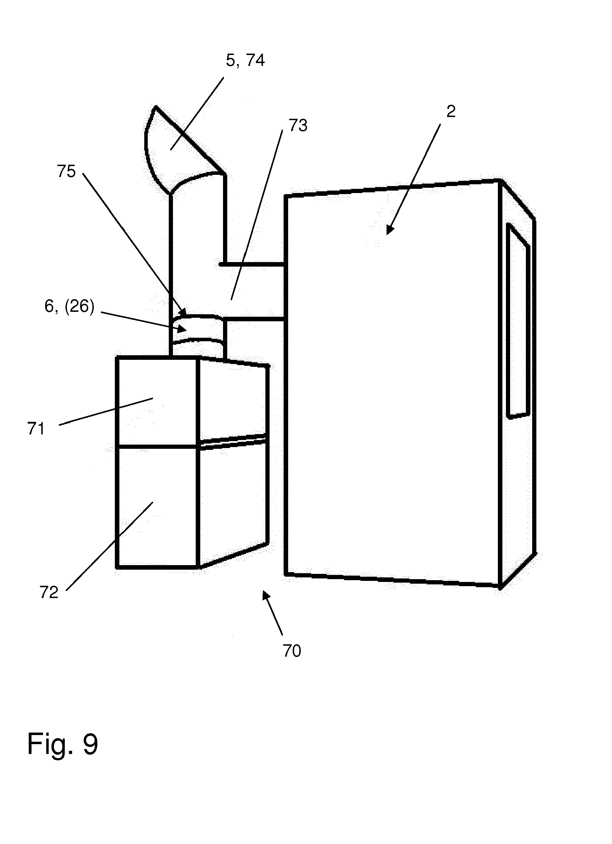

Die Figur 9 zeigt eine Anordnung der Abgasanlage direkt hinter einer Brennstelle 2. Durch eine geeignete Abgasführung im oberen Teil 71 des Blocks 70 läßt sich der Block direkt an die Abgasleitung 7 anschließen. Zu Wartungszwecken, lassen sich die Teile 71 und 72 trennen, so dass auf einfache Weise der Austausch des unteren Teils erfolgen kann.

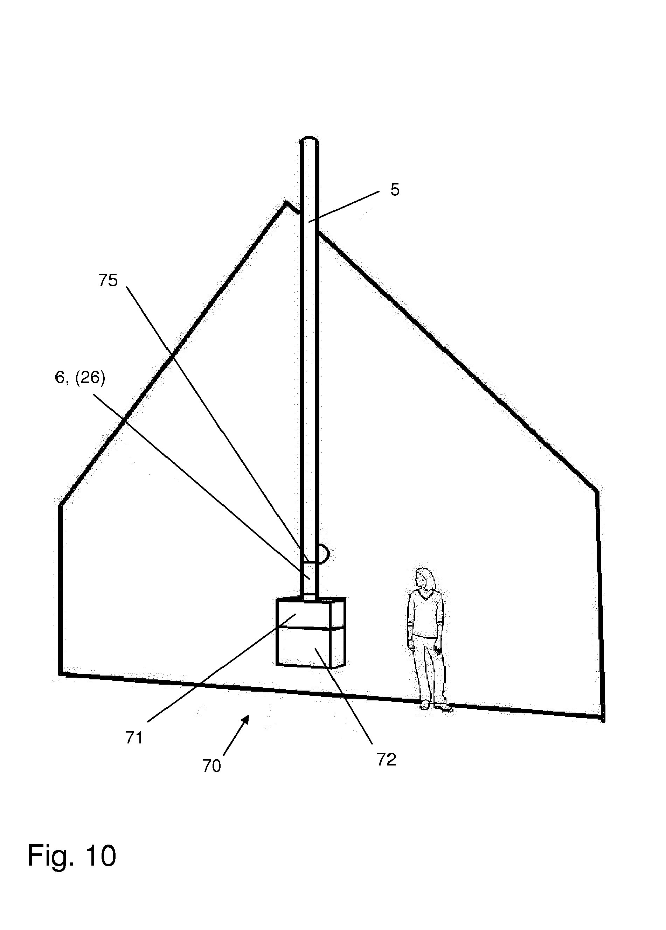

Figur 10 zeigt eine ähnlich geartete Anordnung der Abgasanlage unter der Basis eines Außenkamins. Die Abgasanlage laäßt sich als Block 70 als eine Baueinheit vorteilhaft auch nachträglich installieren.

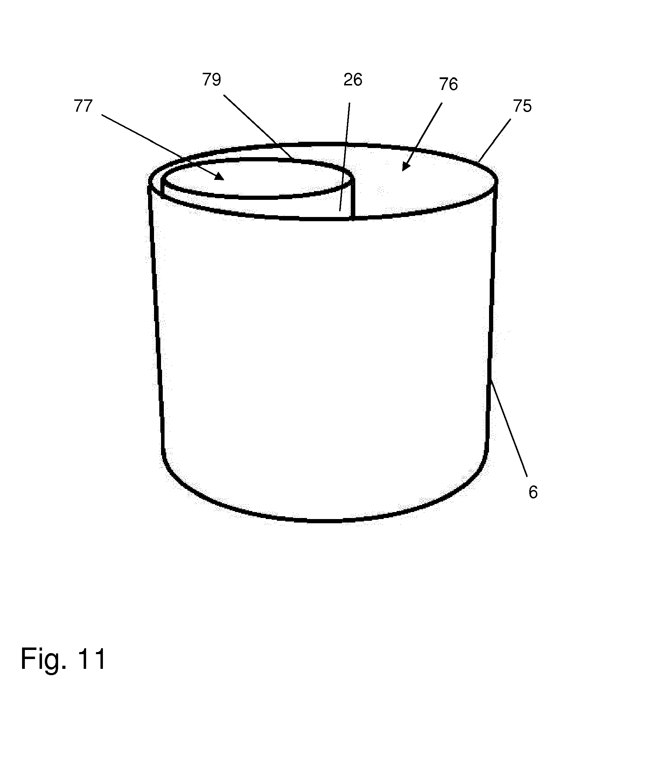

Die prinzipielle Konstruktion eines Abzweigs wie er den Figuren 9 und 10 zugrundeliegt ist in Figur 11 dargestellt, nämlich eine Abgasführung für einen Abzweig mittels eines Rohres im Abgasrohr. Der Anschluß des Blocks 70 erfolgt über den Anschlußquerschnitt 75 der Abzweigleitung 6 an den darüberliegenden Leitungsabschnitt 74. Das Abgas tritt zunächst in den Abzweig 6 ein. Dr Übersichtlichkeit wegen ist die Eintrittsöffnung nicht dargestellt. Innerhalb des Abzweigs 6 ist die Abgasrückführleitung angeordnet, deren Austrittsöffnung 79 in in der Ebene des Anschlußquerschnitts 75 liegt. Durch die Leitung 26 wird der Querschnitt des Abzweigs 6 auf einen sichelfömigen Strömungsquerschnitt 76 reduziert. Im oberen Teil 71 des Blocks 70 erfolgt dann der Anschluß der Strömungsquerschnitte 76 und 77 an die Einlass- und Auslassöffnung des untern Teils 72.

Auf diese Weise ist eine Abgasanlage geschaffen, die auch bei schon bestehenden Feststoffheizungen leicht nachgerüstet werden kann und so den Wirkungsgrad bestehender Feststoffheizungen wesentlich erhöht. Die Wartungsintervalle für die Abgasanlagen können dadurch vorteilhaft vergrößert werden. Bei gleicher Leistung können die Brennstellen wie auch die Abgasanlagen kleiner ausgelegt werden.

### Bezugszeichenliste

- 1: Abgasanlage
- 2: Brennstelle
- 3: Wärmetauscher
- 4: Wärmeträger
- 5: Abgasrohr
- 6: Abzweig
- 7: Abgasventilator
- 8: Winkel
- 9: Abgasstrom
- 10: Abgasreinigungsvorrichtung
- 11: Spülvorrichtung
- 12: elektrostatische Abgasreinigungsvorrichtung
- 13: Rohrbündelwärmetauscher
- 14: Rohr
- 15: Reinigungsvorrichtung
- 16: Wärmetauscherfläche
- 17: Lochplatte
- 18: Loch
- 19: Spülflüssigkeitsreservoir
- 20: Kreislauf
- 21: Pumpe
- 22: Spülflüssigkeitsammler
- 23: Antrieb
- 24: Spülflüssigkeit
- 25: getrennte Abgasleitung
- 26: Abgasrückführleitung
- 27: Primärseite
- 28: Sekundärseite
- 29: Heizkreis
- 30: Zirkulationspumpe
- 31: Heizkörper
- 32: Spülflüssigkeitskreislauf
- 33: Spülflüssigkeitsdüse
- 34: Ansaugleitung
- 35: Ventil
- 36: Sprühelektroden
- 37: Stromquelle
- 38: Kratzer
- 39: Spindel
- 40: Antrieb
- 41: Lager
- 42: Kästen
- 43: Zahnriemen
- 44: Wandlungen
- 45: Wanne
- 46: Ringspalt
- 47: Sensor
- 48: Steuerung
- 49: feste Platte
- 50: elastische Platte
- 51: Rahmen
- 52: Schraube
- 53: Wirkverbindung
- 54: Sensor
- 55: Schraube
- 56: Steg
- 57: Stehbolzen
- 58: Mutter
- 59: Gehäuseplatte
- 60: Wärmetauschergehäuse
- 61: Kanal
- 62: Gewindemutter
- 63: Schlitz
- 64: Gewinde
- 65: Rand
- 66: Platte
- 67: Wandung
- 68: Raum
- 69: Spiegel
- 70: Block
- 71: Oberer Teilblock
- 72: unterer Teilblock
- 73: Leitungsquerschnitt vor Abzweig
- 74: Leitungsquerschnitt nach Abzweig
- 75: Anschlußquerschnitt
- 76: Strömungsquerschnitt Abzweig
- 77: Strömungsquerschnitt Abzweigrückführleitung
- 78: Abgasaustrittsöffnung
- 79: Austrittsöffnung

## Patentansprüche

1. Abgasanlage (1) für Brennstellen (2), insbesondere zur Verbrennung von Feststoffen, vorzugsweise zur Verbrennung von Holz, mit einem Wärmetauscher (3) zur Erwärmung eines, vorzugsweise flüssigen, Wärmeträgers (4) und einem Abgasrohr (5) oder Kamin,
**dadurch gekennzeichnet, dass** die Anlage (1) einen Abzweig (6) vom oder im Abgasrohr (5) aufweist, in dem der Wärmetauscher (3) und ein Abgasventilator (7) angeordnet ist.

2. Abgasanlage für Brennstellen nach Anspruch 1,
**dadurch gekennzeichnet, dass** der der Abzweig (6) wieder in das Abgasrohr (5) mündend ausgebildet ist, vorzugsweise unter einem Winkel (8) von kleiner als 90° zum Abgasstrom (9) im Abgasrohr (5).

3. Abgasanlage für Brennstellen nach Anspruch 1 oder 2,
**dadurch gekennzeichnet, dass** der Wärmetauscher (3) ein Abgasfilter (10) aufweist.

4. Abgasanlage für Brennstellen nach einem der vorhergehenden Ansprüche, **dadurch gekennzeichnet, dass** der Wärmetauscher (3) eine Spülvorrichtung (11) aufweist.

5. Abgasanlage für Brennstellen nach einem der vorhergehenden Ansprüche, **dadurch gekennzeichnet, dass** der Abzweig (6) eine elektrostatische Abgasreinigungsvorrichtung (12) aufweist.

6. Abgasanlage für Brennstellen nach einem der vorhergehenden Ansprüche, **dadurch gekennzeichnet, dass** der Wärmetauscher (3) als Rohrbündelwärmetauscher (13) ausgebildet ist, dessen Rohre (14) vorzugsweise senkrecht angeordnet sind und/oder eine Reinigungsvorrichtung (15) zur Reinigung der Wärmetauscherfläche (16) vorgesehen ist, die vorzugsweise als bewegliche Lochplatte (17) ausgebildet ist, die insbesondere horizontal angeordnet ist, und wobei die Rohre (14) des Wärmetauschers (3) die Löcher (18) der Platte (17) durchdringend angeordnet sind.

7. Abgasanlage für Brennstellen nach einem der vorhergehenden Ansprüche, **dadurch gekennzeichnet, dass** zur Verteilung eines Wärmeträgermedium auf die Rohre (14) mindestens ein Kasten (42) mit einer den Rohren (14) zugewandten Gehäuseplatte (59) vorgesehen ist, die sandwichartig aus mindestens zwei festeren (49) und einer dazwischen angeordeten elastischen Lage (50) bestehend ausgebildet ist.

8. Abgasanlage für Brennstellen nach einem der vorhergehenden Ansprüche, **dadurch gekennzeichnet, dass** ein Spülflüssigkeitsammler (22) vorgesehen ist und ein Kreislauf (20) mit einer darin angeordneten Pumpe (21) sowie ggf. ein Spülflüssigkeitsreservoir (19) vorgesehen ist, wobei die Spülflüssigkeit (24) vorzugsweise Reaktionpartner für Abgasbestandteile enthält.

9. Abgasanlage für Brennstellen nach einem der vorhergehenden Ansprüche, **dadurch gekennzeichnet, dass** die Lochplatte (17) mindestens einen Antrieb (22) aufweist, der einen automatischen Reinigungszyklus abfahrend ausgebildet ist.

10. Abgasanlage für Brennstellen nach einem der vorhergehenden Ansprüche, **dadurch gekennzeichnet, dass** mindestens ein Niveausensor (47) mit einer Wirkverbindung (53) zu einer Steuerung (48) vorgesehen ist, wobei die Steuerung (48) in Abhängigkeit des Niveaus den Reinigungszyklus beeinflussend ausgebildet ist.

11. Abgasanlage für Brennstellen nach einem der vorhergehenden Ansprüche, **dadurch gekennzeichnet, dass** sie als Block (70) mit einem oberen Teil (71) zur Abgasführung und einem unteren Teil (72) mit Wärmetauscher (3) und vorzugsweise mit Abgasventilator (7) geteilt ausgebildet ist.

12. Mechanische Reinigungsvorrichtung für einen Wärmetauscher, wobei der Wärmetauscher (3) als Rohrbündelwärmetauscher (13) ausgebildet ist, und eine Reinigungsvorrichtung (15) zur Reinigung der Wärmetauscherfläche (16) vorgesehen ist, die als bewegliche Lochplatte (17) ausgebildet ist und wobei die Rohre (14) des Wärmetauschers (3) die Löcher (18) der Platte (17) durchdringend angeordnet sind, **dadurch gekennzeichnet, dass** dessen Rohre (14) senkrecht angeordnet sind , und die Lochplatte die horizontal angeordnet ist wobei ein Spülflüssigkeitsammler (22) für vom Wärmetauscher ablaufende Spülflüssigkeit vorgesehen ist und ggf. ein Kreislauf (20) mit einer darin angeordneten Pumpe (21) sowie ggf. ein Spülflüssigkeitsreservoir (19) vorgesehen ist, wobei die Spülflüssigkeit (24) vorzugsweise Reaktionpartner für Abgasbestandteile enthält.

13. Elektrostatischer Filter für eine Abgasanlage (1) mit mindestens einer Brennstelle (2), insbesondere zur Verbrennung von Feststoffen, vorzugsweise zur Verbrennung von Holz, mit einem Wärmetauscher (3) zur Erwärmung eines, vorzugsweise flüssigen, Wärmeträgers (4) und einem Abgasrohr (5) oder Kamin, **dadurch gekennzeichnet, dass** der elektrostatische Filter als Wärmetauscher (3) ausgebildet ist.

14. Elektrostatischer Filter nach Anspruch 13,
**dadurch gekennzeichnet, dass** eine Tauscherfläche des Wärmetauschers als eine Abscheideelektrode der elektrostatischen Abgasreinigungsvorrichtung (12) dient.

15. Verfahren zur Reinigung von mindestens einem Rohrbündelwärmetauscher (13), wobei mindestens eine erste Lochplatte (17), deren Löcher (18) von den Rohren (14) durchdrungen werden, entlang der Rohre bewegt wird,
**dadurch gekennzeichnet, dass** gleichzeitig eine Reinigung mit Reinigungsflüssigkeit erfolgt.
